# EUROPEAN PATENT APPLICATION

(11) **EP 3 498 417 A1**
(43) Date of publication of application: **19.06.2019**
(21) Application number: 17206997.3
(22) Date of filing: 13.12.2017
(51) Int. Cl.: B23K 26/348, B23K 26/60, B23K 9/235, G21C 19/20, B23K 101/06

(54) **WELDING APPARATUS WITH LASER CLEANING DEVICE AND METHOD OF WELDING AND CLEANING**

(71) Applicant: Westinghouse Electric Sweden AB, 721 63 Västerås (SE)
(72) Inventor: REMAHL, Henrik, 725 92 Västerås (SE)
(74) Representative: Bjerkéns Patentbyrå KB (Stockholm)

(57) **Abstract**

A welding apparatus (1) and a method of welding are disclosed. The welding apparatus comprises a welding tool (2) having a welding head (5), which is movable along a welding direction (W_{D}). The welding tool supplies welding energy via the welding head to a metallic surface (6) to be welded, thereby creating a weld bead (8) extending on the metallic surface along the welding direction. A laser cleaning device (3) provides a laser beam (15). Beam directing means directs the laser beam to a spot (16) on the metallic surface. The welding apparatus moves the spot along the welding direction in order to clean the metallic surface.

## Description

### TECHNICAL FIELD OF THE INVENTION

The present invention refers to a welding apparatus according to the preamble of claim 1. Moreover, the present invention refers to a method of welding according to the preamble of claim 15.

### BACKGROUND OF THE INVENTION AND PRIOR ART

Before a welding operation is to be performed, for instance in an existing plant such as a nuclear reactor, cleaning of the metallic surface to be welded is frequently required in order to fulfill the quality requirements of the weld bead. Examples of such welding operations are the renewal of weld joints in various positions, such as pipe nozzles leading to and from a reactor vessel of a nuclear plant. The cleaning of the metallic surface involves a complicated and time-consuming process to be performed before the welding operation and/or between the welding of consecutive weld beads applied onto each other.

Lasers can be used for rapid heat up of substances and has been demonstrated for surface cleaning of metallic surfaces. The laser essentially vaporizes or burns the deposits, oxides, etc. on the metallic surface. DE 10 2005 024 812 discloses a method and a device for laser cleaning of a metallic surface of a rotating workpiece by means of a laser beam. The workpiece performs a rotating and longitudinal movement. It is indicated that the metallic surface could be welded.

### SUMMARY OF THE INVENTION

The object of the present invention is to remedy the problems discussed above. In particular, it is aimed at an improved welding incorporating a more rapid and simplified cleaning of a metallic surface to be welded.

The object is achieved by the welding apparatus initially defined, which is characterized in that the welding apparatus comprises a laser cleaning device, configured to provide a laser beam, and beam directing means configured to direct the laser beam to a spot on the metallic surface, wherein the welding apparatus is configured to permit the spot to move along the welding direction in order to clean the metallic surface.

The laser cleaning of the metallic surface to be welded contributes to ensure a high quality of the weld bead to be applied. By incorporating the laser beam device in the welding apparatus, both the cleaning of the metallic surface to be welded and the welding may be performed in one operation. The welding head and the cleaning device may be moved together in the welding direction by means of a handling device, such as an industrial robot. The laser cleaning may thus be performed simultaneously with the welding so that the complete welding operation is simplified and performed more rapidly.

The welding direction may be straight or curved, to permit a translational movement of the welding head and the spot, or a rotational movement of the welding head and the spot in relation to the metallic surface of the workpiece.

According to an embodiment of the invention, the beam directing means is configured to sweep the laser beam reciprocally about the welding direction in order to create a laser beam treated zone. The laser beam treated zone will thus extend along the welding direction and have a certain width, which ensures that the whole metallic surface to be welded is cleaned before the weld bead is applied.

According to an embodiment of the invention, the laser cleaning device comprises a laser source configured for generating the laser beam.

According to an embodiment of the invention, the laser source is configured to generate a pulsed laser beam composed of laser pulses. The laser pulses may have a pulse length of 1 to 100 ns.

According to an embodiment of the invention, the beam directing means is configured to direct the laser beam of the laser source to the spot on the metallic surface ahead of the weld bead in the welding direction. The beam directing means may thus ensure that the metallic surface is cleaned before the weld bead is applied. The beam directing means may also ensure that the metallic surface is cleaned between the applications of consecutive weld beads.

According to an embodiment of the invention, the beam directing means comprises a light reflector configured to redirect the laser beam towards the spot on the metallic surface. The light reflector may be a mirror. The light reflector may be movable along the welding direction at the same speed as the welding head.

According to an embodiment of the invention, the light reflector is configured to rotate reciprocally around a swing axis. Such a reciprocating rotation, may cause the laser beam to sweep about the welding direction, ensuring that the whole width of the laser treated zone is cleaned.

According to an embodiment of the invention, the laser source is mounted to a structural member of the welding apparatus. The laser source may thus be moved synchronously with the welding head. The laser source and the laser cleaning device may be an integrated part of the welding apparatus. The laser source and associated optics and collimator means may thus be provided in the welding apparatus, and may be movable together with the welding head.

According to an embodiment of the invention, the laser source is located outside a structural member of the welding apparatus, wherein the laser cleaning device comprises a connector configured to be connected to an external beam guide from the laser source. The laser source may thus as an alternative be provided externally outside the structural member of the welding apparatus and connected to the connector of the welding apparatus by means of the external beam guide. This embodiment enables the provision of the welding apparatus and the laser cleaning device in the proximity of the metallic surface to be welded and at a distance, or long distance, from the laser source.

According to an embodiment of the invention, the beam directing means is configured to enable a variation of the focal length and/or the depth of focus of the laser beam. The focal length and/or depth focus of the laser beam may be varied in a plurality of various ways. For instance, the light reflector may be adaptive, the collimator means may be variable and a lens mounted downstream the light reflector may be configured to perform an oscillating movement. One or more of these examples may be used by the welding apparatus. Thanks to the variable focal length and/or focus depth of the beam directing means, the treatment of rough surfaces or surfaces with thick oxide layers or coatings may be possible or improved.

According to an embodiment of the invention, the welding apparatus comprises a gas supply nozzle configured to supply a gas towards the metallic surface. The gas supply nozzle may thus supply the gas, such as a shielding gas based on argon, to the spot on the metallic surface to be welded. The gas supplied may blow away dust and particles released from the metallic surface during the laser cleaning. Furthermore, the gas supplied may cool the welding apparatus and the various components thereof, in particular the components mounted to the structural member of the welding apparatus.

In addition, the gas supplied may function as a shielding gas during the welding operation, wherein a separate gas supply nozzle may be provided in the proximity of a welding tip of the welding head.

According to an embodiment of the invention, the gas supply nozzle is mounted to the welding apparatus to direct the gas to be supplied along the laser beam. Thus, the gas may be supplied to the metallic surface to be cleaned and welded in connection with the laser cleaning.

According to an embodiment of the invention, the gas supply nozzle is provided between the light reflector and the laser supply device to direct the gas towards the light reflector. Such a positioning of the gas supply nozzle, permits the gas to keep the light reflector clean and free from dust and particles produced during the laser cleaning.

According to an embodiment of the invention, the welding apparatus comprises an attachment member configured to be gripped by a handling device, such as an industrial robot, for said moving of the welding head and the spot of the laser beam. The handling device may comprise a gripper configured to grip the attachment member. The welding apparatus may comprise the handling device.

According to an embodiment of the invention, the welding head comprises a welding tip, in particular a TIG-tip. Alternatively, the welding head may comprise a welding wire for MIG/MAG welding, or gas welding nozzle. According to a further alternative, the welding head may comprise a laser welding head or an electron beam head. In case of a laser welding head, the welding energy is supplied from another more powerful, or significantly more powerful, laser source than the laser source of the laser cleaning device.

The object is also achieved by the method initially defined, which is characterized steps of:
directing a laser beam to a spot on the metallic surface, and
moving the spot along the welding direction in order to clean the metallic surface.

According to an embodiment of the invention, the method comprises the step of:
sweeping the laser beam reciprocally about the welding direction in order to create a laser beam treated zone.

According to an embodiment of the invention, the method comprises the step of:
directing the laser beam to the metallic surface ahead of the weld bead in the welding direction, in particular before the weld bead is created by the welding tool.

According to an embodiment of the invention, the method comprises the step of:
varying the focal length and/or the depth of focus of the laser beam.

### BRIEF DESCRIPTION OF THE DRAWING

The present invention is now to be explained more closely through a description of various embodiments and with reference to the drawings attached hereto.
- Fig 1: discloses schematically a sectional side view of a welding apparatus according to a first embodiment of the invention.
- Fig 2: discloses schematically a partly sectional front view illustrating the welding apparatus in Fig 1.
- Fig 3: discloses schematically a view from above of a workpiece being processed by the welding apparatus in Fig 1.
- Fig 4: discloses schematically a sectional side view of a welding apparatus according to a second embodiment of the invention.
- Fig 5: discloses schematically a partly sectional front view of a welding apparatus according to a third embodiment of the invention.
- Fig 6: discloses schematically a sectional side view of a welding apparatus according to a fourth embodiment of the invention.

### DETAILED DESCRIPTION OF EMBODIMENTS

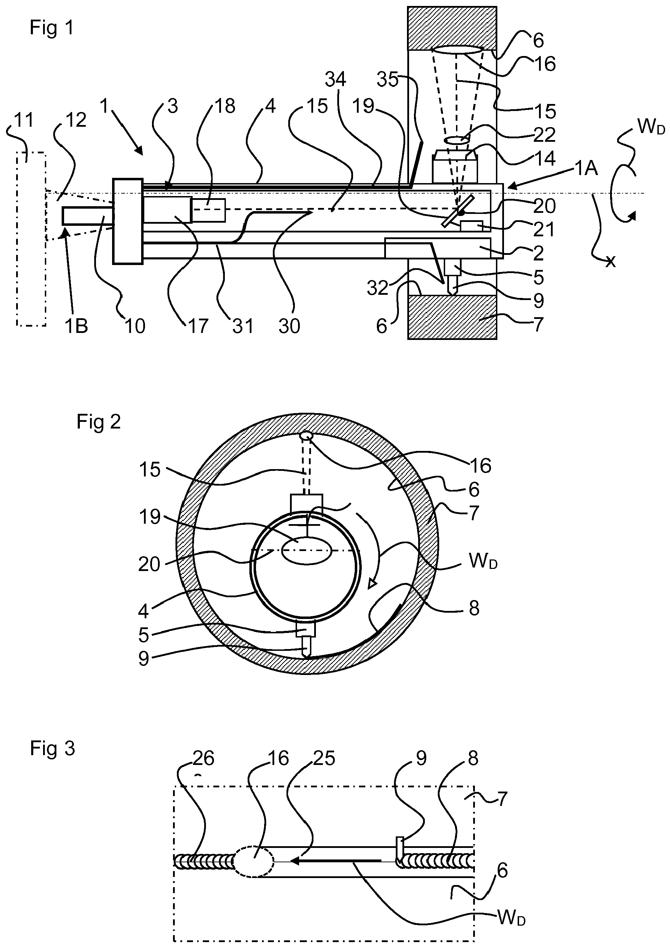

Figs 1 and 2 disclose a welding apparatus 1 according to a first embodiment. The welding apparatus 1 comprises a welding tool 2 and a laser cleaning device 3.

The welding apparatus 1 comprises a structural member 4, which may extend along a longitudinal axis x between a forward end 1A and a rearward end 1 B.

The welding tool 2 comprises a welding head 5. The welding head 5, together with the structural member 4, is movable along a welding direction W_{D}. The welding head 5 may be provided at or in the proximity of the forward end 1A.

The welding tool 2 is configured to supply welding energy via the welding head 5 to a metallic surface 6 of a workpiece 7 to be welded, thereby creating a weld bead 8 extending on the metallic 6 surface along the welding direction W_{D}.

In the first embodiment, the welding tool 2, and thus the welding head 5, is mounted to the structural member 4 of the welding apparatus 1.

In the embodiments disclosed, the welding tool 2 is a TIG-welding tool having a welding tip 9, a TIG-tip, attached to the welding head 5. The welding head 5 is movable along the welding direction W_{D} close to the metallic surface 6 to be welded.

The welding apparatus 1 comprises an attachment member 10, which may be provided at the rear end 1 B and which is configured to be gripped by a schematically indicated handling device 11, for instance a robot or any other suitable automatic handling device. The handling device 11 may comprise a gripper 12 configured to grip the attachment 10 of the welding apparatus 1. The welding apparatus 1 may then be moved by the handling device 11 along the welding direction W_{D}.

The metallic surface 6 to be cleaned and welded may be formed by an inner concave surface of a pipe nozzle, in particular a pipe nozzle of a nuclear plant, for instance extending from the reactor vessel of the nuclear plant.

The laser cleaning device 3 is configured to provide a laser beam 15 and comprises beam directing means configured to direct the laser beam 15 to a spot 16 on the metallic surface 6 via an opening 14, for instance a slot, through the structural member 4. The beam directing means, or at least a part of the beam directing means, is movable to permit the spot 16 of the laser beam 15 to be moved on the metallic surface 6 along the welding direction W_{D}. The purpose of the laser beam 15 is to clean the metallic surface 6 before the welding takes place.

The laser cleaning device 3 comprises a laser source 17 configured to generate the laser beam 15. In the first embodiment, the laser source 17 is provided in and mounted to the structural member 4 of the welding apparatus 1 as can be seen in Fig 1. The beam directing means of the laser cleaning device 3 may also comprise associated optics and collimator means 18 provided downstream, or directly downstream, the laser source 17 for focusing and directing the laser beam 15.

The laser source 17 is configured to generate a pulsed laser beam composed of laser pulses. The laser pulses may have a pulse length of 1 to 100 ns.

The beam directing means of the laser cleaning device 3 comprises a light reflector 19, for instance a mirror, which is configured to rotate reciprocally around a swing axis 20 by means of an actuator 21.

The swing axis 20 may be perpendicular to the longitudinal axis X.

The beam directing means may also comprise optics, for instance a lens 22 mounted downstream the light reflector 18 at or adjacent to the opening 14. The laser beam 15 may pass through the lens 22.

The beam directing means is configured to enable a variation of the focal length and/or the depth of focus of the laser beam 15. The focal length and/or depth focus of the laser beam may be varied in a plurality of various ways. According to a first variant, the light reflector 18 may comprise an adaptive light reflector. According to a second variant, the collimator means 18 may comprise variable collimator means. According to a third variant, the lens 22 is configured to perform an oscillating movement, such as a reciprocating movement along the direction of the laser beam.

The welding apparatus 1 may comprise one or more of these variants.

In the first embodiment, the welding apparatus 1, in particular the structural member 4 of the welding apparatus 1, is configured to be rotated around the longitudinal axis x by the handling device 11, as is indicated in Figs 1 and 2.

The beam directing means is configured to sweep the laser beam 15 reciprocally about the welding direction W_{D} in order to create a laser beam treated zone 25, see Fig 3, by rotating the light reflector 19 reciprocally around the swing axis 20.

Fig 3 illustrates a part of the workpiece 7. In this example, an old weld bead 26 is to be replaced by the weld bead 8. The laser beam 15 is moved along the welding direction W_{D} and is swept reciprocally about the welding direction W_{D} thereby creating the laser beam treated zone 25. The welding tool 2 is activated to create the weld bead 8 on the laser beam treated zone 25 at a distance after the spot 16 in the welding direction W_{D}.

In the first embodiment, the welding tip 9 of the welding head 5 and the spot 16 are rotated around the longitudinal axis x. In Figs 1 and 2, the angular distance between the welding tip 9 and the spot 16 is 180°. The angular distance may, however, be larger or smaller than 180°.

The welding apparatus 1 comprises a gas supply nozzle 30 configured to supply a gas from a gas source (not disclosed) via a gas conduit 31 and the opening 14, by-passing the lens 22, towards the metallic surface 6, in particular towards the spot 16 on the metallic surface 6 of the workpiece 7. The gas supply nozzle 30 is mounted to the structural member 4 of the welding apparatus 1 to direct the gas to be supplied along the laser beam 15.

The gas supply nozzle 30 is provided between the laser supply device 3 and the light reflector 19 and configured to direct the gas towards the light reflector 19. The gas may thus be conveyed towards the light reflector 19 and contribute to keeping the light reflector 19 clean.

The gas may be any suitable shielding gas, such as argon or a shielding gas based on argon.

The welding apparatus 1 may also comprise a second gas supply nozzle 32 provided in the proximity of a welding tip 9 of the welding head 5. The second gas supply nozzle 32 is connected to the same gas source as the gas supply nozzle 30 via the gas conduit 31. The second gas supply nozzle 32 supplies shielding gas to the welding area at the welding tip 9 during the welding operation.

The welding apparatus 1 may also comprise a suction pipe 34 connected to a suction pump (not disclosed) and configured for sucking debris and other particles released during the laser cleaning. The suction pipe 34 may comprise an orifice 35 located in the proximity of the spot 16.

In the first embodiment the welding apparatus 1 is rotating and the workpiece 7 is stationary. Alternatively, the welding apparatus 1 may be stationary whereas the workpiece 7 may be rotating around the longitudinal axis x.

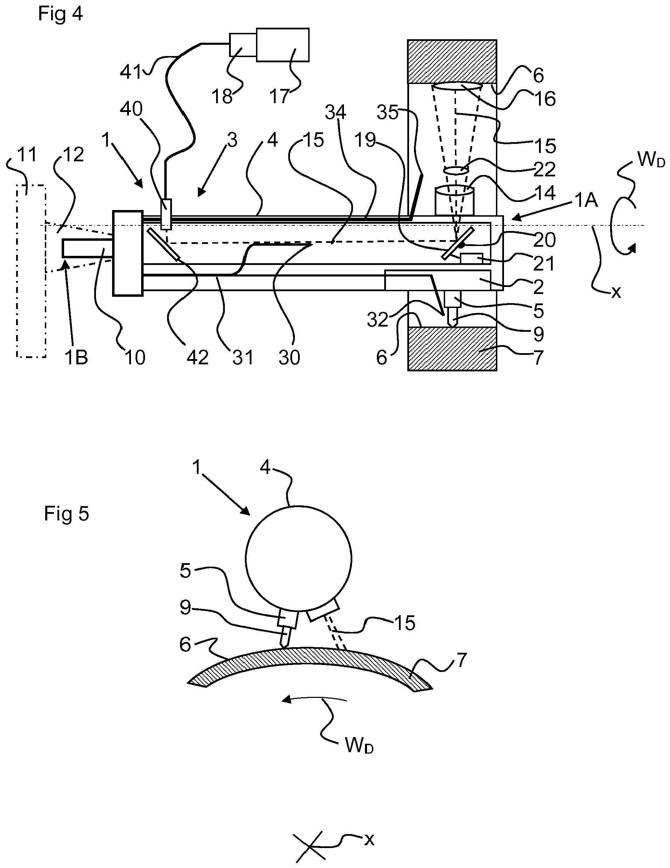

Fig 4 discloses welding apparatus 1 according to a second embodiment of the invention, which differs from the first embodiment in that the laser source 3 is provided outside the structural member 4 of the welding apparatus 1. The laser cleaning device 3 comprises a connector 40 configured to be optically connected to an external beam guide 41, such as an optical fiber, extending between and connecting the connector 40 and the laser source 17. The connector 40 is configured to direct the laser beam from the laser source 17 to an upstream light reflector 42 of the beam directing means. The upstream light reflector 42 is configured to direct laser beam 15 towards the light reflector 19, which then may direct the laser beam 15 towards the spot 16 via the opening 14 as in the first embodiment.

Fig 5 illustrates a third embodiment, which differs from the first embodiment in that the welding apparatus 1 is configured to clean and weld an outer convex surface of a pipe nozzle. All the features of the welding apparatus 1 shown in the first and second embodiments are not disclosed in Fig 5 although these features may be comprised also by the third embodiment.

In Fig 5, the welding apparatus 1 may be rotating around the longitudinal axis x and around the workpiece 7 being stationary. Also in this case the workpiece 7 may rotate around a longitudinal axis x whereas the welding apparatus 1 is stationary.

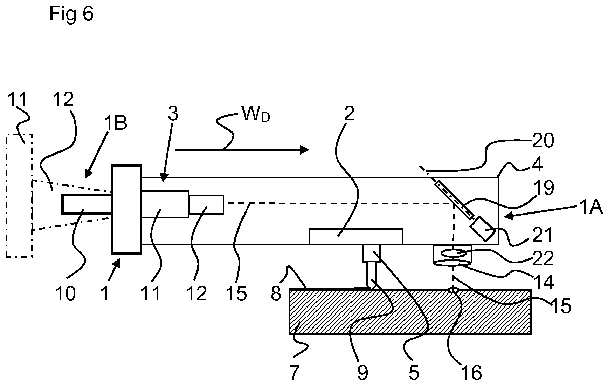

Fig 6 illustrates a fourth embodiment, which differs from the previous embodiments in that the welding apparatus 1 is configured to be moved transversally along a straight line, i.e. the welding direction W_{D} is linear. All the features of the welding apparatus 1 shown in the first and second embodiments are not disclosed in Fig 6 although these features may be comprised also by the forth embodiment.

The present invention is not limited to the embodiments disclosed above, but may be varied and modified within the scope of the following claims.

In the embodiments disclosed, the welding apparatus 1 has been exemplified as a TIG-welding tool. It should be noted, however, that also other kinds of welding apparatuses may be used, for instance a MIG/MAG-welding tool, a laser welding tool, an electron beam welding tool, etc.

## Claims

1. A welding apparatus (1) comprising
a welding tool (2) having a welding head (5), which is movable along a welding direction (W_{D}), wherein the welding tool (2) is configured to supply welding energy via the welding head (5) to a metallic surface (6) to be welded, thereby creating a weld bead (8) extending on the metallic surface (6) along the welding direction (W_{D}),
**characterized in that** the welding apparatus (1) comprises a laser cleaning device (3), configured to provide a laser beam (15), and beam directing means configured to direct the laser beam (15) to a spot (16) on the metallic surface (6), wherein the welding apparatus (1) is configured to permit the spot (16) to move along the welding direction (W_{D}) in order to clean the metallic surface (6).

2. The welding apparatus (1) according to claim 1, wherein the beam directing means is configured to sweep the laser beam (15) reciprocally about the welding direction (W_{D}) in order to create a laser beam treated zone (25).

3. The welding apparatus (1) according to any one of claims 1 and 2, wherein the laser cleaning device (3) comprises a laser source (17) for generating the laser beam (15).

4. The welding apparatus (1) according to claim 3, wherein the beam directing means is configured to direct the laser beam (15) of the laser source (17) to the spot (16) on the metallic surface (6) ahead of the weld bead (8) in the welding direction (W_{D}).

5. The welding apparatus (1) according to any one of 3 and 4, wherein the beam directing means comprises a light reflector (19) configured to redirect the laser beam (15) towards the spot (16) on the metallic surface (6).

6. The welding apparatus (1) according to claim 5, wherein the light reflector (18) is configured to rotate reciprocally around a swing axis (20).

7. The welding apparatus (1) according to any one of claims 3-6, wherein the laser source (17) is mounted to a structural member (4) of the welding apparatus.

8. The welding apparatus (1) according to any one of claims 3-6, wherein the laser source (17) is located outside a structural member (4) of the welding apparatus (1) and wherein the laser cleaning device (3) comprises a connector (40) configured to be connected to an external beam guide (41) from a laser source (17).

9. The welding apparatus (1) according to any one of the preceding claims, wherein the beam directing means is configured to enable a variation of the focal length and/or the depth of focus of the laser beam (15).

10. The welding apparatus (1) according to any one of the preceding claims, wherein the welding apparatus (1) comprises a gas supply nozzle (30) configured to supply a gas towards the metallic surface (6).

11. The welding apparatus (1) according to claim 10, wherein the gas supply nozzle (30) is mounted to the welding apparatus (1) to direct the gas to be supplied along the laser beam (15).

12. The welding apparatus (1) according to claims 5 and 11, wherein the gas supply nozzle (30) is provided between the light reflector (19) and the laser supply device (3) to direct the gas towards the light reflector (19).

13. The welding apparatus (1) according to any one of the preceding claims, wherein the welding apparatus (1) comprises a suction device (34) configured for sucking particles released by the laser beam (15).

14. The welding apparatus (1) according to any one of the preceding claims, wherein the welding apparatus (1) comprises an attachment member (10) configured to be gripped by a handling device (11) for the moving of the welding head (5).

15. A method of welding comprising the steps of:
moving a welding head (5) of a welding tool (2) along a welding direction (W_{D}) and supplying welding energy via the welding head (5) to a metallic surface (6) to be welded, thereby creating a weld bead (8) extending on the metallic surface (6) along the welding direction (W_{D}),
**characterized by** the further steps of:
directing a laser beam (15) to a spot (16) on the metallic surface (6) and moving the spot (16) along the welding direction (W_{D}) in order to clean the metallic surface (6).

16. The method according to claim 15, comprising the step of: sweeping the laser beam (15) reciprocally about the welding direction (W_{D}) in order to create a laser beam treated zone (25).

17. The method according to any one of claims 15 and 16, comprising the step of:
directing the laser beam (15) to the metallic surface (6) ahead of the weld bead (8) in the welding direction (W_{D}), in particular before the weld bead (8) is created by the welding tool (2).
